# FASCICULE DE BREVET EUROPEEN

(11) **EP 2 960 794 B1**
(45) Date de publication et mention de la délivrance du brevet: **05.07.2017**
(21) Numéro de dépôt: 15168734.0
(22) Date de dépôt: 21.05.2015
(51) Int. Cl.: G06F 11/00, H04B 1/74, H04L 12/703, G06F 13/40, G06F 11/20, H04L 12/707

(54) **METHODES ET SYSTEMES DE GESTION D'UNE INTERCONNEXION**
Verfahren und System zur Verwaltung einer Zusammenschaltung
Method and system of management for an interconnection

(30) Priorité: 26.06.2014 FR 1455996
(43) Date de publication de la demande: 30.12.2015
(73) Titulaire: Bull S.A.S., 78340 Les Clayes-sous-Bois (FR)
(72) Inventeur: Saintes, Maxime, 78220 VIROFLAY (FR)
(74) Mandataire: Demulsant, Xavier

(56) Documents cités:
- US-A1- 2011 231 697
- ZIAKAS D ET AL: "IntelÂ TM QuickPath Interconnect Architectural Features Supporting Scalable System Architectures", HIGH PERFORMANCE INTERCONNECTS (HOTI), 2010 IEEE 18TH ANNUAL SYMPOSIUM ON, IEEE, PISCATAWAY, NJ, USA, 18 août 2010 (2010-08-18), pages 1-6, XP031757055, ISBN: 978-1-4244-8547-5

## Description

La présente invention concerne les interconnexions entre des interfaces de connexions dans une infrastructure informatique.

On entend, ici, par infrastructure informatique un serveur, un super-calculateur ou tout autre dispositif informatique comprenant au moins deux interfaces de connexion (ou « socket » en terminologie anglo-saxonne) reliées entre elles par une interconnexion. Une interconnexion est une liaison physique et logique entre deux interfaces de connexion. Une interconnexion comprend, généralement, une pluralité de liens, chacun intégrant une pluralité de voies qui déterminent la largeur du lien de l'interconnexion.

Etant configurées pour répondre à des besoins de calcul croissants, les infrastructures informatiques incluent de plus en plus d'interconnexions d'interfaces de connexions avec cohérence de cache. Il s'ensuit que le risque d'occurrence d'une panne dans ces interconnexions est de plus en plus élevé. Par conséquent, l'exécution d'une application distribuée ou plus simplement la communication entre les sockets d'une infrastructure informatique pourrait être fréquemment mise en péril.

Ainsi, afin de limiter l'impact d'une panne dans une interconnexion sur les performances de l'infrastructure informatique, des solutions de repli doivent être adoptées dès la détection de cette panne.

Il est à noter à ce propos qu'à ce jour la détection de la panne d'un lien d'interconnexion ne se fait que du côté réception de ce lien d'interconnexion, la partie de l'interconnexion qui envoie les données sur ce lien ne pouvant voir cette panne. Un mécanisme approprié est, donc, requis pour signaler cette panne à la partie émettrice de l'interconnexion pour appliquer une solution de repli adéquate en réponse à cette panne.

On distingue, à cet égard, deux approches.

Dans une première approche dite « en bande » ou en terminologie anglo-saxonne « in-band », l'interface de connexion émettrice de l'interconnexion est informée de l'occurrence d'une panne sur un lien de l'interconnexion via cette même interconnexion. Cette approche a
- l'avantage de ne pas nécessiter d'autre canal de communication dédié (c.à.d. un canal de communication autre que l'interconnexion où la panne est survenue), et
- l'inconvénient d'être complexe à mettre en oeuvre et pas suffisamment robuste vu qu'elle utilise l'interconnexion où la panne a eu lieu pour corriger cette panne.

En l'espèce, l'interconnexion de type QPI (pour « Quick Path Interconnect ») pour une interconnexion avec cohérence de cache ne permet de relier que 8 interfaces de connexion au maximum. Une telle interconnexion est connue de: ZIAKAS D ET AL: "Intel QuickPath Interconnect Architectural Features Supporting Scalable System Architectures",HIGH PERFORMANCE INTERCONNECTS (HOTI), 2010 IEEE 18TH ANNUAL SYMPOSIUM ON, IEEE, PISCATAWAY, NJ, USA, 18 août 2010 (2010-08-18), pages 1-6. Par ailleurs, les solutions de repli autorisées par cette approche « inband » sont
- soit la division par deux ou par quatre de la largeur d'un lien de l'interconnexion, en excluant un certain nombre de canaux physiques de ce lien ;
- soit la division par deux de la fréquence d'un lien, en plus de la largeur de ce lien.

Selon une seconde approche hors-bande (ou, en anglais, « out-of-band »), il est aussi possible d'exclure un lien redondant d'une interconnexion, ou d'exclure une interface de connexion (« socket ») de cette interconnexion en utilisant un canal de communication différent de cette interconnexion elle-même.

Un objet de la présente invention est de proposer une solution hors-bande adaptée à la gravité de la panne d'une interconnexion, en pénalisant le moins possible les performances de l'infrastructure informatique intégrant cette interconnexion.

Un autre objet de la présente invention est de proposer une méthode hors-bande permettant de démarrer un serveur contenant jusqu'à 16 sockets interconnectés avec cohérence de cache, bien qu'un composant des interconnexions de ces sockets tombe en panne.

Un autre objet de la présente invention est de pouvoir exclure d'une infrastructure informatique, telle qu'un serveur, un socket.

Un autre objet de la présente invention est de proposer une méthode d'interconnexion d'interfaces de connexion tolérante aux pannes dans les liens d'interconnexion.

Un autre objet de la présente invention est d'améliorer la fiabilité d'une infrastructure informatique en permettant une réaction rapide aux pannes dans ses interconnexions.

Un autre objet de la présente invention est d'adopter des solutions de repli dans les interconnexions d'une infrastructure informatique (telle qu'un serveur ou un super-calculateur) suite à l'occurrence d'une panne dans une interconnexion reliant deux sockets de cette infrastructure.

A ces fins, l'invention propose, selon un premier aspect, une méthode de gestion d'une première interconnexion entre une première carte de circuit imprimé et une deuxième carte de circuit imprimé dans une infrastructure informatique, ladite première interconnexion incluant une pluralité de liens d'interconnexion, ladite première carte de circuit imprimé et ladite deuxième carte de circuit imprimé étant en outre interconnectées par une deuxième interconnexion, chacune de la première et de la deuxième carte de circuit imprimé incluant
- une première interface de connexion configurée pour gérer la première interconnexion ;
- une deuxième interface de connexion configurée pour gérer la deuxième interconnexion;
- un processeur configuré pour exécuter des tâches prédéfinies ;
cette méthode comprenant les étapes suivantes
- détection de l'occurrence d'une panne dans un lien de la première interconnexion par la première interface de connexion de la première carte de circuit imprimé ou par la première interface de connexion de la deuxième carte de circuit imprimé ;
- partage, à travers la deuxième interconnexion, entre la première carte de circuit imprimé et la deuxième carte de circuit imprimé de l'information d'occurrence de la panne dans un lien de la première interconnexion;
- sélection, par la deuxième interface de connexion de la première carte de circuit imprimé et par la deuxième interface de connexion de la deuxième carte de circuit imprimé, d'une solution de repli parmi une liste prédéfinie de solutions de repli en réponse à ladite panne;
- application, par le processeur de la première carte de circuit imprimé, de la solution de repli sélectionnée à la première interconnexion ;
- application, par le processeur de la deuxième carte de circuit imprimé de la solution de repli sélectionnée à la première interconnexion;
- suppression de la solution de repli appliquée de la liste prédéfinie de solutions de repli ;
- réinitialisation la première interconnexion.

La méthode présente, selon diverses réalisations, les caractères suivants, le cas échéant combinés :
- la méthode comprend une étape de synchronisation de l'étape d'application de la solution de repli par le processeur de la première carte de circuit imprimé et l'étape d'application de la solution de repli par le processeur de la deuxième carte de circuit imprimé.
- la liste prédéfinie de solutions de repli comprend
   o la réduction de la largeur du lien en panne de la première interconnexion, sans redémarrage de l'infrastructure informatique;
   o la réduction de la vitesse de transfert du lien en panne de la première interconnexion, en redémarrant l'infrastructure informatique;
   o la réduction de la vitesse de transfert et de la largeur du lien en panne de la première interconnexion, en redémarrant l'infrastructure informatique;
   o l'exclusion du lien redondant en panne, en redémarrant l'infrastructure informatique ;
   o l'exclusion des deux premières interfaces de connexion reliées entre elles par un lien non-redondant en panne de la première interconnexion, en redémarrant l'infrastructure informatique.
- la méthode comprend une étape de communication entre le processeur et la deuxième interface de connexion d'une même carte de circuit imprimé à travers un registre compris dans la première interface de connexion de cette carte de circuit imprimé, ladite carte de circuit imprimé étant la première carte ou la deuxième carte de circuit imprimé.
- la deuxième interconnexion est comprise dans un réseau d'interconnexion Ethernet.

L'invention propose, selon un deuxième aspect, une carte de circuit imprimé comprenant
- une première interface de connexion configurée pour gérer une première interconnexion avec cette carte de circuit imprimé, ladite première interconnexion incluant une pluralité de liens d'interconnexion ;
- une deuxième interface de connexion configurée pour gérer une deuxième interconnexion avec cette carte de circuit imprimé ;
- un processeur configuré pour exécuter des tâches prédéfinies ;
- la première interface de connexion étant en outre configurée pour détecter l'occurrence d'une panne dans un lien de la première interconnexion;
- la deuxième interface de connexion étant en outre configurée
   o pour partager, à travers la deuxième interconnexion, l'information d'occurrence de la panne dans un lien de la première interconnexion;
   o pour sélectionner une solution de repli parmi une liste prédéfinie de solutions de repli en réponse à ladite panne;
   o pour supprimer la solution de repli sélectionnée une fois appliquée de la liste prédéfinie de solutions de repli ;
- le processeur étant en outre configuré
   o pour appliquer la solution de repli sélectionnée à la première interconnexion;
   o pour réinitialiser la première interconnexion.

La deuxième interface de connexion et le processeur communiquent à travers un registre compris dans la première interface de connexion.

Pour réinitialiser la première interconnexion, le processeur est, en outre, configuré pour attendre que la deuxième interface de connexion écrive une valeur prédéfinie dans le registre.

L'invention propose, selon un troisième aspect, une infrastructure informatique comprenant une première interconnexion entre une première carte de circuit imprimé et une deuxième carte de circuit imprimé telles que présentées ci-dessus. L'infrastructure est notamment un serveur ou un supercalculateur.

D'autres objets et avantages de l'invention apparaîtront à la lumière de la description de modes de réalisation, faite ci-après en référence aux dessins annexés dans lesquels :
- la figure 1 illustre une pluralité de cartes de circuit imprimé interconnectées dans une infrastructure informatique selon un mode de réalisation;
- la figure 2 illustre des étapes d'un algorithme distribué à exécuter, par des entités des cartes de circuit imprimé, suite à une panne dans une interconnexion selon un mode de réalisation.

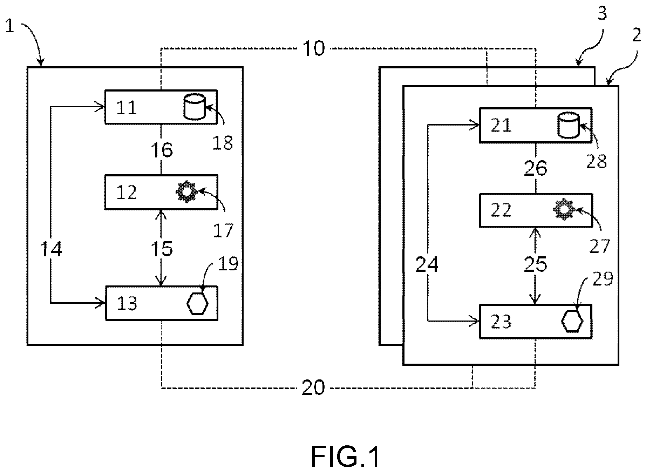

En se référant à la figure 1, il est affiché une pluralité de cartes **1-3** de circuit imprimé interconnectées.

Les cartes **1-3** de circuit imprimé peuvent être des cartes mères **1-3** comprises dans un serveur, un super-calculateur ou toute autre infrastructure informatique. A titre d'exemple, le serveur « Bullion**2** »®, produit proposé par le déposant et disponible dans le commerce, peut inclure jusqu'à huit cartes mères **1-3.**

Une carte **1** de circuit imprimé est directement interconnectée à chacune des autres cartes **2-3** de circuit imprimé au moyen d'une première interconnexion **10.**

Cette première interconnexion **10** est dite directe, ou encore complète, dans le sens où chaque carte **1** de circuit imprimé a la visibilité directe de toutes les autres cartes **2-3** de circuit imprimé auxquelles elle est interconnectée. Autrement dit, la communication entre deux cartes **1-2** de circuit imprimé ne peut se faire en passant par une autre carte **3** de circuit imprimé. Il en résulte qu'une carte **1** de circuit imprimé a une première interconnexion **10** avec chacune des autres cartes **2-3** de circuit imprimé.

Dans un mode de réalisation, la première interconnexion **10** est de type XQPI (pour « eXtended QuickPath Interconnect ») qui est une solution d'interconnexion proposée par le déposant et disponible dans le commerce.

Par ailleurs, les cartes **1-3** de circuit imprimé sont, en outre, reliées entre eux au moyen d'une deuxième interconnexion **20.** Cette deuxième interconnexion **20** constitue un réseau secondaire pour la mise en oeuvre d'un mécanisme hors-bande (« out-of-band ») pour la gestion de première interconnexion **10.**

Dans un mode de réalisation, la deuxième interconnexion **20** est un réseau d'interconnexion Ethernet reliant les cartes **1-3** de circuit imprimé.

Une carte **1, 2** de circuit imprimé comprend une première interface de connexion **11, 21** configurée pour gérer les interactions de cette carte **1, 2** de circuit imprimé à travers la première interconnexion **10.**

Dans un mode de réalisation, la première interface de connexion **11, 21** est une puce électronique configurée pour gérer une première interconnexion **10.** Dans le cas d'une première interconnexion **10** de type XQPI, la puce électronique **11, 21** est le composant BCS (pour « Bull Coherent Switch », une solution proposée par le déposant et disponible dans le commerce) ou toute version ultérieure de celui-ci telle que BCS2 (pour « Bull Coherent Switch 2»). Il en résulte que, dans un mode de réalisation, les interfaces de connexion BCS2 des différentes cartes **1-3** de circuit imprimé sont reliées entre elles, deux à deux, au moyen d'une interconnexion XQPI **10.**

La première interface de connexion **11, 21** est pourvue d'un registre **18, 28,** ou plus généralement d'un espace mémoire **18, 28,** configuré d'une part pour y écrire et, éventuellement, lire le(s) erreur(s) survenue(s) sur la première interconnexion **10,** et d'autre part utilisé pour synchroniser les programmes informatiques **17, 27** et les procédures **19, 29** (présentés ci-dessous).

La carte **1, 2** de circuit imprimé comprend, en outre, un processeur **12, 22** (ou CPU pour « Central Processing Unit » en terminologie anglo-saxonne) configuré pour exécuter un programme informatique **17, 27.** Ce programme informatique **17, 27** est de type BIOS (pour « Basic Input Output System ») ou, plus généralement, de type micrologiciel incluant une pluralité de tâches. Ainsi, le processeur **12, 22** est programmé pour exécuter des tâches spécifiées dans le programme informatique **17, 27.**

Le processeur **12, 22** est rellé à la première interface de connexion **11, 21** au moyen d'un lien OPI (pour « Quick Path Interconnect») **16, 26.**

De plus, la carte **1, 2** de circuit imprimé comprend une deuxième interface de connexion **13, 23** configurée pour gérer la deuxième interconnexion **20.**

La deuxième interface de connexion **13, 23** est le composant BMC (pour « Baseboard Management Controller», une solution proposée par le déposant et disponible dans le commerce) configuré pour gérer le réseau d'interconnexion Ethernet **20.**

La deuxième interface de connexion **13, 23** d'une carte **1, 2** de circuit imprimé communique avec la première interface de communication **11, 21,** et avec le processeur **12, 22** de cette même carte **1, 2** de circuit imprimé, respectivement, par des canaux **14-15, 24-25** à faible débit. Par exemple, les canaux **14-15, 24-25** à faible débit sont des bus I2C (pour « Inter Integrated Circuit »).

Les interactions de la deuxième interface de connexion **13, 23 à** travers la deuxième interconnexion **20** et à travers les canaux **14-15, 24-25** à faible débit sont effectuées conformément à une procédure **19, 29** prédéfinie.

En exécutant, respectivement, le programme informatique **17** et la procédure **19,** le processeur **12** et la deuxième interface de connexion **13** d'une même carte **1** de circuit imprimé communiquent par l'intermédiaire du registre **18** local.

A l'occurrence d'une erreur sur un lien de la première interconnexion **10,** cette erreur est écrite/mentionnée dans le registre de la carte de circuit imprimé réceptrice pour ce lien de l'interconnexion. A titre d'exemple, si la carte **2** de circuit imprimé constitue la partie réceptrice pour la première interconnexion **10,** alors, à l'occurrence d'une erreur dans un lien de cette première interconnexion, cette erreur est notifiée dans le registre **28** local à la carte **2** de circuit imprimé réceptrice.

Plus généralement, à l'occurrence d'une panne sur la première interconnexion **10** liant deux cartes **1** et **2** de circuit imprimé, cette panne est notifiée dans le registre **18, 28** de la carte **1, 2** de circuit imprimé réceptrice de cette première interconnexion **10.**

A l'occurrence d'une panne dans la première interconnexion **10,** les liens de cette première interconnexion **10** sont initialisés avec une solution de repli choisie par les deuxièmes interfaces de connexion **13, 23.** En d'autres termes, ces liens sont reprogrammés avec une solution de repli ensuite réinitialisés. La solution de repli est choisie/sélectionnée parmi la liste suivante,
- réduction, par exemple division par deux, de la largeur du lien en panne de la première interconnexion **10,** sans redémarrage de l'infrastructure informatique;
- réduction, par exemple division par deux, de la vitesse de transfert du lien en panne de la première interconnexion **10,** en redémarrant l'infrastructure informatique;
- réduction de la vitesse de transfert et de la largeur du lien en panne de la première interconnexion **10,** en redémarrant l'infrastructure informatique;
- exclusion du lien redondant en panne, en redémarrant l'infrastructure informatique ;
- exclusion des premières interfaces de connexion **11, 21** reliées entre elles par un lien non-redondant en panne, en redémarrant l'infrastructure informatique.

La solution de repli à appliquer en réponse à une panne dans la première interconnexion **10** est choisie, de préférence, dans l'ordre croissant de dégradation des performances de l'infrastructure informatique. A titre d'exemple, la liste des solutions de repli présentée ci-dessus est classée dans l'ordre croissant de dégradation des performances de l'infrastructure informatique.

Pour la division par deux de la vitesse de transfert, l'information des liens en panne de la première interconnexion **10** dont la vitesse peut être divisée par deux est enregistrée dans une mémoire de la deuxième interface de connexion **13, 23.** Cette mémoire de la deuxième interface de connexion **13, 23** est persistante à travers les cycles arrêt/marche (coupure de courant puis rétablissement du courant ou power-off/power-on) de l'infrastructure informatique. Ainsi, lorsque l'infrastructure informatique subit un cycle arrêt/marche, les deuxièmes interfaces de connexion **13** et **23** coordonnent, respectivement, avec le processeur **12** et le processeur **22** pour reconfigurer, au début de l'initialisation de cette infrastructure et avant l'initialisation de la première interconnexion **10,** la vitesse de transfert (par exemple, la diviser par deux) des liens de cette première interconnexion **10** dans les premières interfaces de connexion **11** et **21** aux deux bouts de la première interconnexion **10.**

Pour l'exclusion d'un lien redondant, l'information des liens redondants en panne qui peuvent être exclus est enregistrée dans la mémoire de la deuxième interface de communication **13, 23** qui est persistante à travers les cycles arrêt/marche (power-off/power-on) du serveur. Ainsi, lorsque l'infrastructure informatique comprenant la première interconnexion **10** subit un cycle arrêt/marche, les deuxièmes interfaces de connexion **13, 23** indiquent, au début de l'initialisation de l'infrastructure informatique et avant l'initialisation de la première interconnexion **10,** aux processeurs **12, 22** de ne pas initialiser les liens exclus de la première interconnexion **10.**

Par ailleurs, pour l'exclusion d'une carte **1, 2** de circuit imprimé, l'information des liens non-redondants en panne de la première interconnexion **10** est enregistrée dans une mémoire des deuxièmes interfaces de connexion **13, 23** qui est persistante à travers les cycles arrêt/marche du serveur. Lorsque l'infrastructure informatique comprenant cette première interconnexion **10** subit un cycle arrêt/marche, chacune des deux deuxièmes interfaces de connexion **13, 23** des cartes **1, 2** de circuit imprimé exclues ne démarre pas le processeur **12, 22** et la première interface de connexion **11, 21** locaux. Au début de l'initialisation de l'infrastructure informatique et avant l'initialisation de la première interconnexion **10,** les autres deuxièmes interfaces de connexion indiquent à leurs processeurs locaux de ne pas essayer de communiquer avec les cartes de circuit imprimé exclues. Avantageusement, cette action permet de démarrer l'infrastructure informatique quoi qu'il arrive, au prix bien entendu d'une baisse de performances.

A l'occurrence d'une panne sur un lien de la première interconnexion **10,** le processeur **22** et la deuxième interface de connexion **23** de la carte **2** de circuit imprimé réceptrice pour ce lien de la première interconnexion **10** exécutent un algorithme distribué pour appliquer une solution de repli. Cet algorithme distribué résulte de l'exécution conjuguée du programme informatique **27** par le processeur **22** et de la procédure **29** par la deuxième interface de connexion **23.** Avantageusement, en disposant d'une mémoire persistante à travers les cycles arrêt/marche, la deuxième interface de connexion **23** est capable de choisir une solution de repli suite à une panne dans la première interconnexion **10.**

Le processeur **22** et la deuxième interface de connexion **23** sont conjugués dans le sens où leur travail (à savoir l'exécution, respectivement, du programme informatique **27** et la procédure **29**) est simultané et concourt à une fin commune, à savoir l'initialisation de la première interconnexion **10** avec la solution de repli appropriée en réponse à la panne détectée.

Pour l'exécution de l'algorithme distribué, le processeur **22** et la deuxième interface de connexion **23** d'une même carte **2** de circuit imprimé communiquent en faisant des lectures et écritures dans le registre **28** de cette carte **2** de circuit imprimé.

A l'occurrence d'une panne dans la première interconnexion **10,** l'algorithme distribué permet
- de partager, à travers la deuxième interconnexion **20** (qui constitue un réseau secondaire pour la mise en oeuvre d'un mécanisme hors-bande pour la gestion de première interconnexion **10**), l'information d'occurrence de cette panne ;
- de sélectionner dans la liste de solutions de repli celle qui dégrade le moins les performances de l'infrastructure informatique ;
- d'appliquer cette solution de repli;
- de supprimer cette solution de la liste des solutions de repli possibles ; et
- de réinitialiser la première interconnexion **10.**

Pour l'initialisation de la première interconnexion **10,** chacune des deux premières interfaces de connexion **11, 21** est contrôlée (c.à.d. pilotée)
- par le processeur **12, 22** conformément au programme informatique **17, 27.** Ce contrôle s'effectue à travers le lien QPI **16, 26** qui relie le processeur **12, 22** à la première interface de connexion **11, 21** correspondante ; et
- par la deuxième interface de connexion **13, 23,** conformément, à la procédure **19, 29.** Ce contrôle s'effectue à travers le canal à faible débit **14, 24.**

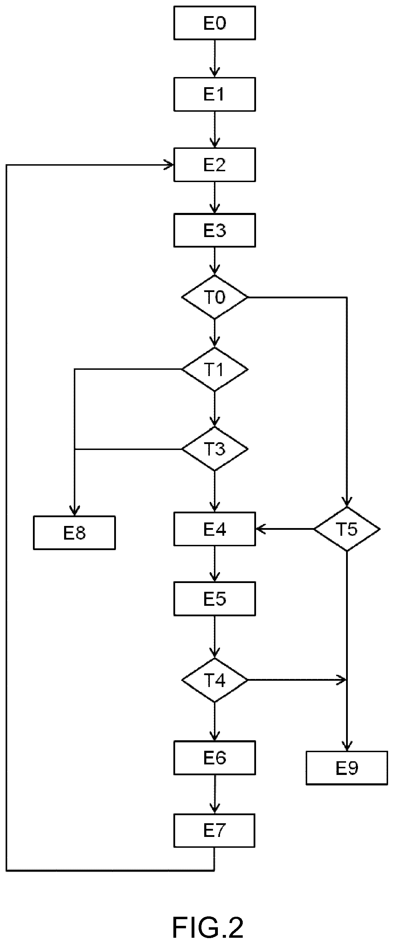

Pour simplifier la présentation de cet algorithme distribué, en référence à la figure 2, la carte **2** de circuit imprimé est considérée dans la suite comme étant la carte de circuit imprimé réceptrice dans la première interconnexion **10.** La carte **1** de circuit imprimé est considérée comme étant la partie émettrice dans cette première interconnexion **10.** Il s'ensuit qu'à l'occurrence d'une erreur sur cette première interconnexion **10,** c'est dans le registre **28** de la carte **2** de circuit imprimé que cette erreur est notée.

Dans une première étape de synchronisation **(E0** sur la figure 2), le processeur **12** attend que la deuxième interface de connexion **13** locale écrive une valeur prédéfinie dans le registre **18** local (par exemple, mettre la valeur un dans le registre **18**). Cette étape vise à ce que les programmes informatique **17** et **27** des cartes **1** et **2** de circuit imprimé interconnectées par la première interconnexion **10** arrivent à un point de synchronisation. En effet, étant communicantes à travers la deuxième interface de connexion **20,** les deuxièmes interfaces de connexion **13** et **23** conduisent les deux processeurs **17** et **27** à un point de synchronisation en fonction des valeurs qu'elles écrivent dans, respectivement, le registre **18** et le registre **28.**

Chacun des deux processeurs **12** et **22** prépare ensuite l'initialisation (étape **E1** sur la figure 2) des liens locaux de la première interconnexion **10** conformément aux instructions des programmes informatiques **17** et **27** respectifs.

Subséquemment, l'initialisation des liens locaux de la première interconnexion **10** est effectuée (étape **E2** sur la figure 2) en exécutant, par les processeurs **12** et **22,** respectivement, des instructions des programmes informatique **17** et **27.**

Autrement dit, le processeur **12, 22** de chaque carte **1, 2** de circuit imprimé essaie d'initialiser (étape **E2** sur la figure 2) les liens locaux de la première interconnexion **10.** Ainsi, à l'issue de l'étape **E2** et dès l'occurrence d'une panne sur la première interconnexion **10,** la valeur du registre **28** de la carte **2** de circuit imprimé réceptrice est égale à une valeur indiquant la présence d'une panne.

Suite à l'étape d'initialisation **E2,** le processeur **12, 22** de chaque carte **1, 2** de circuit imprimé lit le registre **18, 28** local des liens de la première interconnexion **10** (étape **E3** sur la Figure 2) pour y voir s'il y a des liens en panne.

Ainsi, en fonction de la valeur lue du registre (test **T0** exécuté localement par le processeur), deux suites sont possibles dans l'algorithme distribué.

Si aucune erreur n'est détectée localement (chaque processeur n'ayant connaissance que des erreurs locales à sa carte de circuit imprimé) dans les liens de la première interconnexion **10,** l'initialisation de ces liens est considérée comme étant réussie et se termine (étape **E9**), à condition que la solution de repli sélectionnée soit déjà appliquée (test **T5**). Si la solution de repli sélectionnée est à appliquer pour la première fois (Test **T5**), alors un renvoi vers l'étape **E4** (qui sera présentée ci-dessous) est effectué.

En présence d'un lien en panne de la première interconnexion **10** local à une carte **1, 2** de circuit imprimé (valeur du registre local étant égale à un), le processeur **12, 22** correspondant vérifie (test **T1** sur la figure 2) que la solution de repli choisie n'a déjà pas été appliquée (étape **E7** sur la figure 2) à ce lien en panne de la première interconnexion **10** (par exemple, vérifier que la division par deux de la largeur du lien de la première interconnexion **10** ne lui est déjà pas été appliquée).

Autrement dit, le test **T1** permet de vérifier si la solution de repli choisie sera appliquée pour la première fois au lien en panne de la première interconnexion **10.**

Si c'est le cas, c'est-à-dire que la solution de repli choisie n'a déjà pas été appliquée sur le lien en panne de la première interconnexion, alors le processeur **12, 22** local vérifie **(test T3** sur la figure 2) que l'application à ce lien de la solution de repli choisie est autorisée.

Si l'application de la solution de repli choisie est autorisée, alors le processeur **12, 22** transmet (étape **E4** sur la figure 2) l'information des liens défaillants (notamment, la valeur des registres) à la deuxième interface de connexion **13, 23** locale.

A l'étape suivante **E5,** chacune des deuxièmes interfaces de connexion **13, 23** fait la synthèse de l'état des liens de la première interconnexion **10** et transmet cette synthèse au processeur **12 22** local. Pour cela, les deuxièmes interfaces de connexion
- communiquent entre eux la valeur des registres **18, 28** de leur carte de circuit imprimé respective à travers la deuxième interface d'interconnexion **20** (ainsi, à l'occurrence d'une panne, le registre **18** de la carte **1** de circuit imprimé émettrice reçoit la même valeur indiquant la présence d'une erreur par l'intermédiaire de la deuxième interface de connexion **13**) ;
- font la synthèse des erreurs, et la transmette à leur processeur local à travers le registre local.

Autrement dit, les deuxièmes interfaces de connexion **13** et **23** partagent (étape **E5**), à travers la deuxième interconnexion **20,** toute occurrence de panne dans la première interconnexion **10.**

Avantageusement, la synthèse des erreurs transmise aux processeurs **12, 22** permet à chacun des processeurs **12, 22** de connaitre les erreurs vues à l'autre bout de ses liens locaux.

Un test **T4,** exécuté par les deuxièmes interfaces de connexion **13** et **23,** vérifie si aucun lien de la première interconnexion **10** n'est en panne (c.à.d. vérifie globalement qu'il n'y a pas d'erreur). Si c'est le cas, alors l'initialisation des liens des premières interconnexions **10** est considérée comme étant réussie (étape **E9** sur la figure 2).

Sinon, c'est-à-dire en présence d'un lien en panne de la première interconnexion **10,** une nouvelle étape de synchronisation (**E6** sur la figure 2) dans laquelle chacun des processeurs **12, 22** se met en attente sur un point de synchronisation avec la deuxième interface de connexion **13, 23** locale de sa carte **1, 2** de circuit imprimé à travers le registre **28** local. En effet, le processeur **12, 22** attend à ce que la deuxième interface de connexion **23** locale écrive dans le registre **28** local une valeur particulière marquant le point de synchronisation (par exemple, la valeur quatre).

Dès que le registre **18, 28** local vaut la valeur quatre, la solution de repli choisie est appliquée (étape **E7** de la figure 2). C'est-à-dire, après une étape de synchronisation (**E6** dans la Figure 2), chacun des processeurs **12, 22** reprogramme (étape **E7** sur la Figure 2) les liens de la première interconnexion **10** dans lesquels il a vu une erreur ou pour lesquels la deuxième interface de connexion **13, 23** locale lui a signalé une erreur.

Comme indiqué sur la figure 2, la fin de cette étape **E7** renvoie à l'étape **E2** d'initialisation. L'initialisation reprend sans pouvoir à nouveau réappliquer la même solution de repli qui vient d'être appliquée. Autrement dit, en présence d'une erreur, l'initialisation des liens de la première interconnexion échoue et se termine parce que la solution de repli a déjà été effectuée (test **T1**) à l'étape **E7,** d'où l'étape **E8** indiquant l'arrêt de la procédure d'initialisation des liens de la première interconnexion **10.** De même, lorsque la solution de replie choisie n'est pas autorisée, cette étape **E8** est aussi appelée.

Avantageusement, la communication des informations nécessaires à l'algorithme entre deux côtés d'un lien de la première interconnexion **10** est réalisée par un mécanisme « out-of-band », mettant en oeuvre la deuxième interconnexion **20.** Cette deuxième interconnexion **20,** en l'occurrence une interconnexion Ethernet des deuxièmes interfaces de connexion **13** et **23,** constitue un autre canal de communication que la première interconnexion **10** des premières interfaces de connexion **11** et **21.** Avantageusement, ce mécanisme est plus simple et plus robuste qu'un mécanisme « inband » passant par la première interconnexion **10** des premières interfaces de connexion **11** et **21.**

Avantageusement, les différents modes de réalisations présentés ci-dessus permettent la communication entre deux processus distribués malgré l'occurrence d'une panne sur leur interconnexion.

Avantageusement, lorsqu'une panne est détectée sur un lien de la première interconnexion **10** et est mentionnée dans le registre **18, 28,** l'algorithme distribué décrit ci-dessus permet d'initialiser la première interconnexion **10** malgré la panne qui s'y trouve.

## Revendications

1. Méthode de gestion d'une première interconnexion (10) entre une première carte (1) de circuit imprimé et une deuxième carte (2) de circuit imprimé dans une infrastructure informatique, ladite première interconnexion incluant une pluralité de liens d'interconnexion, ladite première carte (1) de circuit imprimé et ladite deuxième carte (2) de circuit imprimé étant en outre interconnectées par une deuxième interconnexion (20), chacune de la première et de la deuxième carte (1 ,2) de circuit imprimé incluant
- une première interface de connexion (11, 21) configurée pour gérer la première interconnexion (10) ;
- une deuxième interface de connexion (13, 23) configurée pour gérer la deuxième interconnexion (20) ;
- un processeur (12, 22) configuré pour exécuter des tâches prédéfinies ;
cette méthode comprenant les étapes suivantes
- détection de l'occurrence d'une panne dans un lien de la première interconnexion (10) par la première interface de connexion (11) de la première carte (1) de circuit imprimé ou par la première interface de connexion (21) de la deuxième carte (2) de circuit imprimé ;
- partage, à travers la deuxième interconnexion (2), entre la première carte (1) de circuit imprimé et la deuxième carte (2) de circuit imprimé de l'information d'occurrence de la panne dans un lien de la première interconnexion (10);
- sélection, par la deuxième interface de connexion (13) de la première carte de circuit imprimé et par la deuxième interface de connexion (23) de la deuxième carte de circuit imprimé, d'une solution de repli parmi une liste prédéfinie de solutions de repli en réponse à ladite panne;
- application, par le processeur de la première carte (1) de circuit imprimé, de la solution de repli sélectionnée à la première interconnexion (10) ;
- application, par le processeur de la deuxième carte (1) de circuit imprimé de la solution de repli sélectionnée à la première interconnexion (10);
- suppression de la solution de repli appliquée de la liste prédéfinie de solutions de repli ;
- réinitialisation la première interconnexion (10).

2. Méthode selon la revendication 1, comprenant en outre une étape de synchronisation de l'étape d'application de la solution de repli par le processeur (12) de la première carte (1) de circuit imprimé et l'étape d'application de la solution de repli par le processeur (22) de la deuxième carte (2) de circuit imprimé.

3. Méthode selon la revendication 1 ou 2, dans laquelle la liste prédéfinie de solutions de repli comprend
- la réduction de la largeur du lien en panne de la première interconnexion (10), sans redémarrage de l'infrastructure informatique;
- la réduction de la vitesse de transfert du lien en panne de la première interconnexion (10), en redémarrant l'infrastructure informatique;
- la réduction de la vitesse de transfert et de la largeur du lien en panne de la première interconnexion (10), en redémarrant l'infrastructure informatique;
- l'exclusion du lien redondant en panne, en redémarrant l'infrastructure informatique ;
- l'exclusion des deux premières interfaces de connexion (11, 21) reliées entre elles par un lien non-redondant en panne de la première interconnexion (10), en redémarrant l'infrastructure informatique.

4. Méthode selon l'une quelconque des revendications précédentes, comprenant en outre une étape de communication entre le processeur (12, 22) et la deuxième interface de connexion (13, 23) d'une même carte (1, 2) de circuit imprimé à travers un registre (18, 28) compris dans la première interface de connexion (11, 21) de cette carte (1, 2) de circuit imprimé, ladite carte (1, 2) de circuit imprimé étant la première carte (1) ou la deuxième carte (2) de circuit imprimé.

5. Méthode selon l'une quelconque des revendications précédentes, dans laquelle la deuxième interconnexion est comprise dans un réseau d'interconnexion Ethernet.

6. Une carte (1) de circuit imprimé comprenant
- une première interface de connexion (11) configurée pour gérer une première interconnexion (10) avec cette carte (1) de circuit imprimé, ladite première interconnexion (10) incluant une pluralité de liens d'interconnexion ;
- une deuxième interface de connexion (13) configurée pour gérer une deuxième interconnexion (20) avec cette carte (1) de circuit imprimé ;
- un processeur (12) configuré pour exécuter des tâches prédéfinies ;
- la première interface de connexion (11) étant en outre configurée pour détecter l'occurrence d'une panne dans un lien de la première interconnexion (10) ;
- la deuxième interface de connexion étant en outre configurée
o pour partager, à travers la deuxième interconnexion, l'information d'occurrence de la panne dans un lien de la première interconnexion;
o pour sélectionner une solution de repli parmi une liste prédéfinie de solutions de repli en réponse à ladite panne;
o pour supprimer la solution de repli sélectionnée une fois appliquée de la liste prédéfinie de solutions de repli ;
- le processeur étant en outre configuré
o pour appliquer la solution de repli sélectionnée à la première interconnexion;
o pour réinitialiser la première interconnexion.

7. Carte (1) de circuit imprimé selon la revendication précédente, dans laquelle la deuxième interface de connexion (13) et le processeur (12) communiquent à travers un registre (18) compris dans la première interface de connexion (11).

8. Carte (1) de circuit imprimé selon la revendication précédente, dans laquelle, pour réinitialiser la première interconnexion (10), le processeur (12) est configuré pour attendre que la deuxième interface de connexion (13) écrive une valeur prédéfinie dans le registre (18).

9. Infrastructure informatique comprenant une première interconnexion (10) entre une première carte (1) de circuit imprimé et une deuxième carte de circuit imprimé selon la revendication 6.

## Patentansprüche

1. Verfahren zur Verwaltung einer ersten Zusammenschaltung (10) zwischen einer ersten Leiterplatte (1) und einer zweiten Leiterplatte (2) in einer Computerinfrastruktur, wobei die erste Zusammenschaltung mehrere Zusammenschaltungsverbindungen umfasst, wobei die erste Leiterplatte (1) und die zweite Leiterplatte (2) ferner über eine zweite Zusammenschaltung (20) zusammengeschaltet sind, wobei sowohl die erste als auch die zweite Leiterplatte (1, 2) Folgendes umfassen:
- eine erste Anschlussschnittstelle (11, 21), die für die Verwaltung der ersten Zusammenschaltung (10) ausgeführt ist,
- eine zweite Anschlussschnittstelle (13, 23), die für die Verwaltung der zweiten Zusammenschaltung (10) ausgeführt ist,
- einen Prozessor (12, 22), der für die Ausführung von vorgegebenen Aufgaben ausgeführt ist,
wobei dieses Verfahren folgende Schritte umfasst:
- das Auftreten einer Störung in einer Verbindung der ersten Zusammenschaltung (10) wird über die erste Anschlussschnittstelle (11) der ersten Leiterplatte (1) oder über die erste Anschlussschnittstelle (21) der zweiten Leiterplatte (2) erfasst,
- die Information über das Auftreten der Störung in einer Verbindung der ersten Zusammenschaltung (10) wird über die zweite Zusammenschaltung (2) zwischen der ersten Leiterplatte (1) und der zweiten Leiterplatte (2) geteilt,
- eine Rückfalllösung aus einer vorgegebenen Liste von Rückfalllösungen in Reaktion auf die Störung wird über die zweite Anschlussschnittstelle (13) der ersten Leiterplatte und über die zweite Anschlussschnittstelle (23) der zweiten Leiterplatte ausgewählt,
- über den Prozessor der ersten Leiterplatte (1) wird die ausgewählte Rückfalllösung bei der ersten Zusammenschaltung (10) angewendet,
- über den Prozessor der zweiten Leiterplatte (1) wird die ausgewählte Rückfalllösung bei der ersten Zusammenschaltung (10) angewendet,
- die angewendete Rückfalllösung wird aus der vorgegebenen Liste von Rückfalllösungen gestrichen,
- die erste Zusammenschaltung (10) wird reinitialisiert.

2. Verfahren nach Anspruch 1, das ferner einen Schritt umfasst, bei dem der Schritt des Anwendens der Rückfalllösung durch den Prozessor (12) der ersten Leiterplatte (1) und der Schritt des Anwendens der Rückfalllösung durch den Prozessor (22) der zweiten Leiterplatte (2) synchronisiert werden.

3. Verfahren nach Anspruch 1 oder 2, bei dem die vorgegebene Liste von Rückfalllösungen Folgendes umfasst:
- Reduzierung der Breite der gestörten Verbindung der ersten Zusammenschaltung (10) ohne Neustart der Computerinfrastruktur,
- Reduzierung der Übertragungsgeschwindigkeit der gestörten Verbindung der ersten Zusammenschaltung (10) durch Neustart der Computerinfrastruktur,
- Reduzierung der Übertragungsgeschwindigkeit und der Breite der gestörten Verbindung der ersten Zusammenschaltung (10) durch Neustart der Computerinfrastruktur,
- Ausschließen der gestörten redundanten Verbindung durch Neustart der Computerinfrastruktur,
- Ausschließen der beiden ersten Anschlussschnittstellen (11, 21), die über eine gestörte nicht redundante Verbindung der ersten Zusammenschaltung (10) miteinander verbunden sind, durch Neustart der Computerinfrastruktur.

4. Verfahren nach einem der vorhergehenden Ansprüche, das ferner einen Schritt zur Kommunikation zwischen dem Prozessor (12, 22) und der zweiten Anschlussschnittstelle (13, 23) ein und derselben Leiterplatte (1, 2) über ein in der ersten Anschlussschnittstelle (11, 21) dieser Leiterplatte (1, 2) enthaltenes Register (18, 28) umfasst, wobei es sich bei der Leiterplatte (1, 2) um die erste (1) oder um die zweite Leiterplatte (2) handelt.

5. Verfahren nach einem der vorhergehenden Ansprüche, bei dem die zweite Zusammenschaltung in einem Ethernet-Verbindungsnetz enthalten ist.

6. Leiterplatte (1), die Folgendes umfasst:
- eine erste Anschlussschnittstelle (11), die für die Verwaltung einer ersten Zusammenschaltung (10) mit dieser Leiterplatte (1) ausgeführt ist, wobei die erste Zusammenschaltung (10) mehrere Zusammenschaltungsverbindungen umfasst,
- eine zweite Anschlussschnittstelle (13), die für die Verwaltung einer zweiten Zusammenschaltung (20) mit dieser Leiterplatte (1) ausgeführt ist,
- einen Prozessor (12), der für die Ausführung von vorgegebenen Aufgaben ausgeführt ist,
- wobei die erste Anschlussschnittstelle (11) ferner für die Erfassung des Auftretens einer Störung in einer Verbindung der ersten Zusammenschaltung (10) ausgeführt ist,
- wobei die zweite Anschlussschnittstelle ferner dazu ausgeführt ist
o über die zweite Zusammenschaltung die Information über das Auftreten der Störung in einer Verbindung der ersten Zusammenschaltung zu teilen,
o eine Rückfalllösung aus einer vorgegebenen Liste von Rückfalllösungen in Reaktion auf die Störung auszuwählen,
o die ausgewählte Rückfalllösung aus der vorgegebenen Liste von Rückfalllösungen zu streichen, sobald diese angewendet wurde,
- wobei der Prozessor ferner dazu ausgeführt ist,
o die ausgewählte Rückfalllösung bei der ersten Zusammenschaltung anzuwenden,
o die erste Zusammenschaltung zu reinitialisieren.

7. Leiterplatte (1) nach dem vorhergehenden Anspruch, wobei die zweite Anschlussschnittstelle (13) und der Prozessor (12) über ein in der ersten Anschlussschnittstelle (11) enthaltenes Register (18) kommunizieren.

8. Leiterplatte (1) nach dem vorhergehenden Anspruch, wobei der Prozessor (12) für die Reinitialisierung der ersten Zusammenschaltung (10) so ausgeführt ist, dass er darauf wartet, dass die zweite Anschlussschnittstelle (13) einen vorgegebenen Wert in das Register (18) schreibt.

9. Computerinfrastruktur mit einer ersten Zusammenschaltung (10) zwischen einer ersten Leiterplatte (1) und einer zweiten Leiterplatte nach Anspruch 6.

## Claims

1. Method of managing a first interconnection (10) between a first printed circuit card (1) and a second printed circuit card (2) in a computerized infrastructure, said first interconnection including a plurality of interconnection links, said first printed circuit card (1) and said second printed circuit card (2) being further interconnected by a second interconnection (20), each of the first and of the second printed circuit card (1, 2) including
- a first connection interface (11, 21) configured to manage the first interconnection (10);
- a second connection interface (13, 23) configured to manage the second interconnection (20);
- a processor (12, 22) configured to execute predefined tasks;
said method comprising the following steps
- detection of the occurrence of a breakdown in a link of the first interconnection (10) by the first connection interface (11) of the first printed circuit card (1) or by the first connection interface (21) of the second printed circuit card (2);
- sharing, through the second interconnection (20), between the first printed circuit card (1) and the second printed circuit card (2) of the information of occurrence of the breakdown in a link of the first interconnection (10);
- selection, by the second connection interface (13) of the first printed circuit card and by the second connection interface (23) of the second printed circuit card, of a fallback solution from among a predefined list of fallback solutions in response to said breakdown;
- application, by the processor of the first printed circuit card (1), of the selected fallback solution to the first interconnection (10);
- application, by the processor of the second printed circuit card (2), of the selected fallback solution to the first interconnection (10);
- deletion of the applied fallback solution from the predefined list of fallback solutions.
- reinitialization of the first interconnection (10).

2. Method according to claim 1, further comprising a step of synchronizing the step of applying the fallback solution by the processor (12) of the first printed circuit card (1) and the step of applying the fallback solution by the processor (22) of the second printed circuit card (2).

3. Method according to claim 1 or 2, wherein the predefined list of fallback solutions comprises
- the reduction of the width of the broken link of the first interconnection (10), without restarting the computerized infrastructure;
- the reduction of the transfer speed of the broken link of the first interconnection (10), while restarting the computerized infrastructure;
- the reduction of the transfer speed and of the width of the broken Link of the first interconnection (10), while restarting the computerized infrastructure;
- the exclusion of the redundant broken link, while restarting the computerized infrastructure;
- the exclusion of the two first connection interfaces (11, 12) connected to each other by a non-redundant broken link of the first interconnection (10), while restarting the computerized infrastructure.

4. Method according to any one of the preceding claims, further comprising a step of communication between the processor (12, 22) and the second connection interface (13, 23) of the same printed circuit card (1, 2) through a register (18, 28) included in the first connection interface (11, 21) of this printed circuit card (1, 2), said printed circuit card (1, 2) being the first (1) or the second (2) printed circuit card.

5. Method according to any one of the preceding claims, wherein the second interconnection is included in an Ethernet interconnection network.

6. A printed circuit card (1) comprising
- a first connection interface (11) configured to manage a first interconnection (10) with this printed circuit card (1), said first interconnection (10) including a plurality of interconnection links;
- a second connection interface (13) configured to manage a second interconnection (20) with this printed circuit card (1);
- a processor (12) configured to execute predefined tasks;
- the first connection interface (11) being further configured to detect the occurrence of a breakdown in a link of the first interconnection (10);
- the second connection interface being further configured
o to share, through the second interconnection, the information of the occurrence of the breakdown in a line of the first interconnection;
o to select a fallback solution from among a predefined list of fallback solutions in response to said breakdown;
o to delete the selected fallback solution once it is applied from the predefined list of fallback solutions;
- the processor being further configured
o to apply the selected fallback solution to the first interconnection;
o to reinitialize the first interconnection.

7. Printed circuit card (1) according to the preceding claim, wherein the second connection interface (13) and the processor (12) communicate through a register (18) included in the first connection interface (11).

8. Printed circuit card (1) according to the preceding claim, wherein, in order to reinitialize the first interconnection (10), the process (12) is configured to wait for the second connection interface (13) to write a predefined value in the register (18).

9. Computerized infrastructure comprising a first interconnection (10) between a first printed circuit card (1) and a second printed circuit card according to claim 6.
